# EUROPÄISCHE PATENTSCHRIFT

(11) **EP 0 310 004 B1**
(45) Veröffentlichungstag und Bekanntmachung des Hinweises auf die Patenterteilung: **09.06.1993**
(21) Anmeldenummer: 88115938.8
(22) Anmeldetag: 28.09.1988
(51) Int. Cl.: H02B 1/26, H05K 5/02

(54) **Gehäuse**
Casing
Boîtier

(30) Priorität: 01.10.1987 DE 8713225 U
(43) Veröffentlichungstag der Anmeldung: 05.04.1989
(73) Patentinhaber: bopla Gehäuse Systeme GmbH, D-32257 Bünde (DE)
(72) Erfinder: Niehausmeier, Uwe, W-4986 Rödinghausen (DE)
(74) Vertreter: Patentanwälte Dipl.-Ing. Bodo Thielking Dipl.-Ing. Otto Elbertzhagen

(56) Entgegenhaltungen:
- FR-A- 1 332 712
- FR-A- 2 457 390
- GB-A- 1 542 244
- US-A- 4 443 911

## Beschreibung

Die Erfindung betrifft ein Gehäuse, insbesondere zum Einbau elektrischer oder elektronischer Bauteile, mit einem Rahmenteil, an dem ein Deckel mittels eines Doppelgelenkscharniers schwenkbar angelenkt ist, wobei das Doppelgelenkscharnier zwei zueinander parallele Gelenkstifte aufweist, deren einer Lageraugen im Rahmenteil und deren anderer Lageraugen im Deckel durchsetzt.

Gehäuse dieser Art (FR-A-1 332 712) sind bekannt. Bei diesen Gehäusen werden Doppelgelenkscharniere verwendet, um die Gehäuse oder Gehäuseteile möglichst weit aufschwenken zu können. Nachteilig bei Gehäusen mit den als bekannt vorausgesetzten Doppelgelenkscharnieren ist die Tatsache, daß die Schwenklage der beiden gelenkig miteinander verbundenen Gehäuseteile nicht eindeutig definiert ist. Hierdurch ergeben sich Schwierigkeiten beim Schließen der Gehäuse.

Eine eindeutige Verschwenkposition von Gehäuseteilen ist erzielbar mit Scharnieren, die lediglich einen Gelenkstift aufweisen. Diese bekannten Scharniere haben den Nachteil, daß die Lageraugen vergleichsweise weit über die Gehäusekontur vorstehen.

Auf dem Gebiet von schwenkbar gelenkig miteinander verbundenen Ausstellungstafeln oder Reklametafeln, die als Displays od. dgl. verwendet werden, ist es bereits bekannt, zwei benachbarte Reklametafeln über Doppelgelenkscharniere in der Weise zu verbinden, daß jeweils die vertikalen Stirnkanten unterschiedlicher benachbarter Platten miteinander im Eingriff stehende, konzentrisch zu den beiden Gelenkstiften verlaufende Verzahnungsbereiche aufweisen. Das Gebiet der Ausstellungsdisplays hat weder technisch noch gedanklich irgendwelche Berührungspunkte mit Gehäusen der gattungsgemäßen Art.

Der Erfindung liegt die Aufgabe zugrunde, ein Gehäuse der als bekannt vorausgesetzten Art so auszubilden, daß die Position der gelenkig miteinander verbundenen Gehäuseteile in jedem Verschwenkzustand eindeutig definiert ist.

Die Lösung dieser Aufgabe erfolgt erfindungsgemäß dadurch, daß die zueinander benachbarten Bereiche des Rahmenteils und des Deckels miteinander im Eingriff stehende, konzentrisch zu den beiden Gelenkstiften verlaufende Verzahnungsbereiche aufweisen.

Weitere Merkmale der Erfindung ergeben sich aus den weiteren Unteransprüchen.

Die erfindungsgemäße Konstruktion erlaubt die Schaffung eines Gehäuses, das große definierte Schwenkwinkel aufweist, wobei gleichwohl die Gelenkachsen innerhalb der Gehäusekontur liegen. Es läßt sich auf diese Weise eine glattflächige Gestaltung des Gehäuses ohne vorstehende störende Lageraugen oder Ausbuchtungen erzielen.

Nachstehend werden bevorzugte Auführungsformen der Erfindung anhand der Zeichnung im einzelnen beschrieben. Es zeigen:
- Figur 1: eine perspektivische Ansicht einer ersten Ausführungsform eines Gehäuses mit einem Grundteil, einem Rahmenteil und einem Deckel,

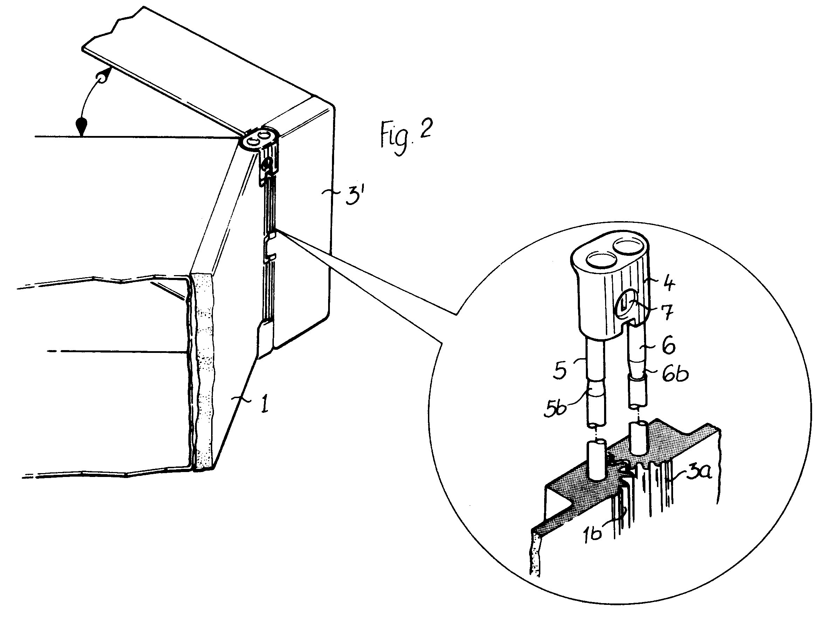

- Figur 2: eine Verbindungsstelle zwischen einem Rahmenteil und einem anders ausgebildeten Grundteil, wobei ein Detail in einer vergrößerten Darstellung im Kreis wiedergegeben ist,
- Figur 3: eine perspektivische Darstellung der Gelenkstifte mit den zugehörigen Endstücken und einem Verriegelungsorgan,
- Figur 4: eine in der Breite verkürzte Aufsicht auf eine weitere Ausführungsform mit Deckel, Rahmen und Grundteil,
- Figur 5: eine Seitenansicht, teilweise geschnitten,auf die Ausführung gemäß Figur 4 in Richtung des Pfeils V,
- Figur 6: einen Schnitt entlang Linie A-B gemäß Figur 5.

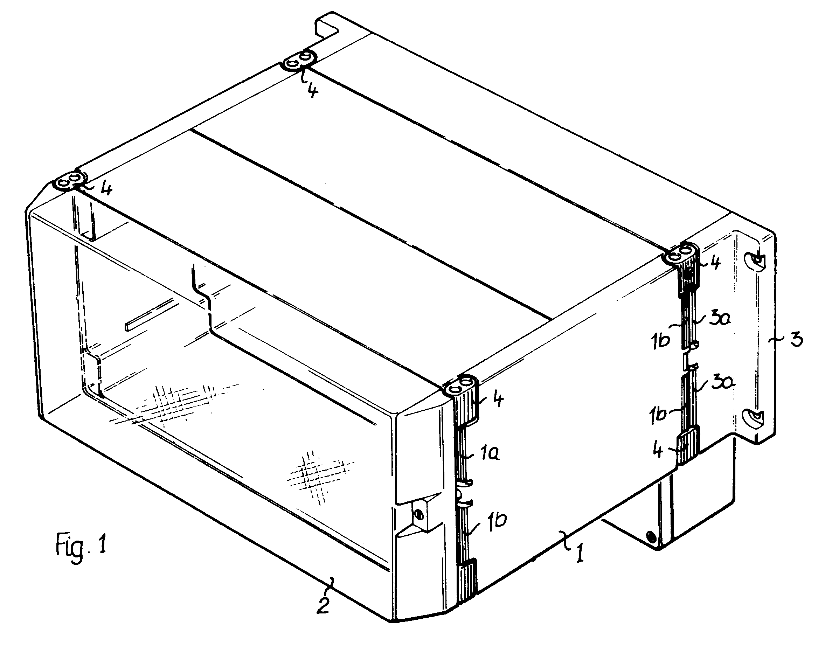

Bei der Ausführungsform gemäß Figur 1 ist ein Deckel 2 an einem Rahmenteil 1 angelenkt, das seinerseits wiederum mit einem Grundteil 3 verbunden ist. Das Teil 1 ist als "Rahmenteil" bezeichnet und kann unterschiedliche Formen aufweisen. So kann als Rahmenteil auch das Unterteil eines Gehäuses dienen.

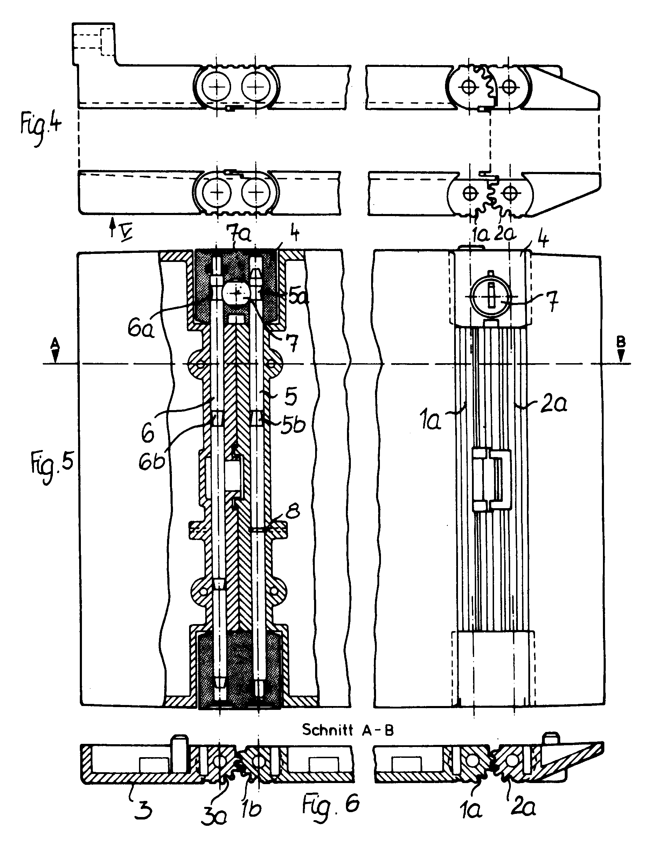

Die Ausbildung des Doppelgelenkscharniers ist an verschiedenen Stellen jeweils gleich:
Die Bereiche 1b und 3a des Rahmenteils 1 und des Grundteils 3 besitzen eine miteinander kämmende Verzahnung. Dies ist besonders deutlich aus Figur 6 ersichtlich.

In gleicher Weise sind die Verzahnungen 1a und 2a zwischen Rahmenteil 1 und Deckel 2 ausgebildet.

Das Doppelgelenkscharnier besitzt zueinander parallel verlaufende Gelenkstifte 5 und 6, die entsprechende Lageraugen der Gehäuseteile durchsetzen. Auf die Endbereiche zweier benachbarter Gelenkstifte 5 und 6 sind Endstücke 4 aufgesetzt. Die Gelenkstifte 5 und 6 besitzen jeweils an einem Ende Gewindebereiche 5c bzw. 6c, welche in Muttern 4c eingeschraubt sind. Die Muttern 4c sind innerhalb der Endstücke 4 gegen Verdrehung gesichert.

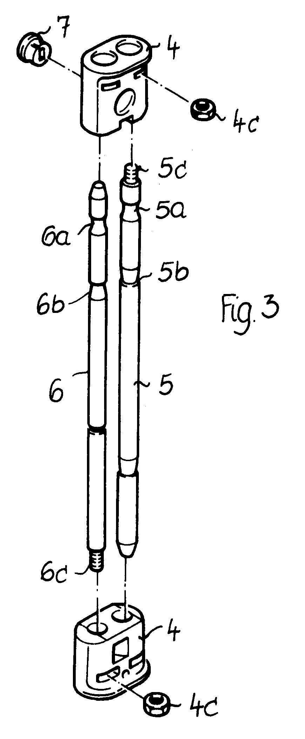

Die Gelenkstifte 5 und 6 besitzen ballige Einschnürungen 5a und 6a, in die das quer zu den Längsachsen der Gelenkstifte verdrehbar gelagerte Verriegelungsorgan 7 eingreift. Das Verriegelungsorgan 7 besitzt seitliche Abflachungen. In einer ersten Schwenkposition sichert das Verriegelungsorgan das Endstück gegen eine in Längsrichtung der Gelenkstifte erfolgende Bewegung. In einer zweiten, um 90° um die Achse 7a verdrehten Position können die Gelenkstifte teilweise ausgehoben werden. Eine Sicherung gegen ein vollständiges Herausziehen erfolgt durch ein Einfallen des Federrings 8 (vgl. Figur 5) in die kegelige Einschnürung 5b.

Sowohl die Gehäuseteile als auch das Endstück 4 bestehen aus Kunststoff.

An der gemäß Figur 1 rechten Seite des Deckels 2 ist eine Schnappverriegelung vorgesehen, die nicht näher dargestellt ist.

Das Vorsehen von Doppelgelenkverbindungen an mehreren Verbindungsstellen erlaubt einerseits ein Abschwenken der so miteinander verbundenen Gehäuseteile. Andererseits ist auch ein vollständiges Lösen der Gehäuseteile durch ein teilweise erfolgendes Herausziehen der Gelenkstifte in der beschriebenen Weise möglich.

## Patentansprüche

1. Gehäuse, insbesondere zum Einbau elektrischer oder elektronischer Bauteile, mit einem Rahmenteil (1), an dem ein Deckel (2) mittels eines Doppelgelenkscharniers schwenkbar angelenkt ist, wobei das Doppelgelenkscharnier zwei zueinander parallel verlaufende Gelenkstifte (5; 6) aufweist, deren einer Lageraugen im Rahmenteil (1) und deren anderer Lageraugen im Deckel (2) durchsetzt,
dadurch gekennzeichnet,
daß die zueinander benachbarten Bereiche des Rahmenteils (1) und des Deckels (2) miteinander im Eingriff stehende, konzentrisch zu den beiden Gelenkstiften (5; 6) verlaufende Verzahnungsbereiche (1a; 2a) aufweisen.

2. Gehäuse nach Anspruch 1,
dadurch gekennzeichnet,
daß das Rahmenteil (1) an mindestens einer der dem Deckel (2) gegenüberliegenden Stirnkanten einen weiteren Verzahnungsbereich (1b) aufweist, der im Eingriff steht mit einem Verzahnungsbereich (3a) eines weiteren Gehäuseteils (3), wobei die Ausbildung der Gelenkverbindung zwischen Rahmenteil (1) und weiterem Gehäuseteil (3) der Ausbildung der Gelenkverbindung zwischen Rahmenteil (1) und Deckel (2) entspricht.

3. Gehäuse nach Anspruch 1 oder 2,
dadurch gekennzeichnet,
daß die Enden der benachbarten Gelenkstifte (5; 6) in parallelen Lagerbohrungen (4a; 4b) eines gemeinsamen Endstücks (4) liegen.

4. Gehäuse nach einem oder mehreren der Ansprüche 1 bis 3,
dadurch gekennzeichnet,
daß die Enden der Gelenkstifte (5; 6) umlaufende Einschnürungen (5a; 6a) aufweisen, in die ein gemeinsames Verriegelungsorgan (7) eingreift.

5. Gehäuse nach Anspruch 4,
dadurch gekennzeichnet,
daß das Verriegelungsorgan (7) um eine quer zu den Achsen der Gelenkstifte (5; 6) verlaufende Achse (7a) verschwenkbar ist und in einer ersten Schwenkposition das Endstück (4) gegen eine Bewegung in Richtung der Achsen der Gelenkstifte (5; 6) sichert sowie in einer zweiten Schwenkposition in diese Richtung freigibt.

6. Gehäuse nach einem oder mehreren der Ansprüche 1 bis 5,
dadurch gekennzeichnet,
daß sich die Verzahnungsbereiche (1a; 1b; 2a; 3a) annähernd über die gesamte Länge der benachbarten Gehäusebereiche erstrecken.

7. Gehäuse nach einem oder mehreren der Ansprüche 1 bis 6,
dadurch gekennzeichnet,
daß die Gelenkstifte (5; 6) kegelige Einschnürungen (5b; 6b) aufweisen und daß in den die Gelenkstifte (5; 6) umgebenden Gehäusebereichen Federelemente (8) vorgesehen sind, die in Richtung auf die Zentren der Gelenkstifte (5; 6) vorgespannt sind.

8. Gehäuse nach Anspruch 7,
dadurch gekennzeichnet,
daß die Federelemente (8) Federringe sind.

9. Gehäuse nach einem oder mehreren der Ansprüche 1 bis 8,
dadurch gekennzeichnet,
daß es als Kunststoff-Spritzgußteil ausgebildet ist.

## Claims

1. Housing, more particularly for the installation of electrical or electronic components, with a frame part (1) to which a lid (2) is attached for swivel movement by means of a double hinge joint wherein the double hinge joint has two parallel hinge pins (5;6) of which one passes through bearing eyes in the frame part (1) and the other passes through bearing eyes in the lid (2),
characterised in that the adjoining areas of the frame part (1) and lid (2) have interengaging toothed areas (1a;2a) which run concentric with the two hinge pins (5; 6).

2. Housing according to claim 1
characterised in that the frame part (1) has on at least one of the end edges opposite the lid (2) a further toothed area (1b) which engages with a toothed area (3a) of a further housing part (3) wherein the design of the articulated connection between the frame part (1) and further housing part (3) corresponds to the design of the articulated connection between the frame part (1) and lid (2).

3. Housing according to claim 1 or 2
characterised in that the ends of the adjoining hinge pins (5; 6) lie in parallel bearing bores (4a; 4b) of a common end member (4).

4. Housing according to one or more of claims 1 to 3
characterised in that the ends of the hinge pins (5; 6) have circumferential restrictions (5a; 6a) into which a common locking member (7) engages.

5. Housing according to claim 4
characterised in that the locking member (7) can swivel about an axis (7a) running across the axes of the hinge pins (5;6) and in a first swivel position secures the end member (4) against moving in the direction of the axes of the hinge pins (5; 6) and in a second swivel position releases the end member in this direction.

6. Housing according to one or more of claims 1 to 5
characterised in that the toothed areas (1a; 1b; 2a; 2b) extend approximately over the entire length of the adjoining housing areas.

7. Housing according to one or more of claims 1 to 6
characterised in that the hinge pins (5; 6) have conical restrictions (5b; 6b) and that in the housing areas surrounding the hinge pins (5; 6) there are spring elements (8) which are pretensioned in the direction of the centres of the hinge pins (5; 6).

8. Housing according to claim 7
characterised in that the spring elements (8) are spring rings.

9. Housing according to one or more of claims 1 to 8
characterised in that it is designed as an injection moulded plastics part.

## Revendications

1. Boîtier, notamment pour le montage d'éléments électriques ou électroniques, avec un cadre (1), auquel un couvercle (2) est monté, pivotant, à l'aide d'une charnière à double articu-lation, laquelle présente deux chevilles d'articulation (5; 6) parallèles, dont l'une pénètre dans les yeux de roulement du cadre (1) et l'autre dans ceux du couvercle (2),
caractérisé par le fait
que les zones voisines du cadre (1) et du couvercle (2) présentent des dentures (1a; 2a) en prise mutuelle, lesquelles sont disposées concentriquement par rapport aux deux chevilles d'articulation (5; 6).

2. Boîtier selon revendication 1,
caractérisé par le fait
que le cadre (1) est pourvu, au moins sur un bord opposé au couvercle (2), d'une autre denture (1b), qui est en prise avec une denture (3a) d'un autre élément (3) du boîtier, la conception de l'assemblage articulé du cadre (1) et d'un autre élément (3) du boîtier correspondant à celle de l'assemblage articulé du cadre (1) et du couvercle (2).

3. Boîtier selon revendication 1 ou 2,
caractérisé par le fait
que les bouts des chevilles d'articulation voisines (5; 6) sont logés dans les forures de roulement parallèles d'une pièce d'extrémité (4) commune.

4. Boîtier selon une ou plusieurs revendications 1 à 3,
caractérisé par le fait
que les extrémités des chevilles d'articulation (5; 6) présentent des étranglements périphériques (5a; 6a), dans lesquels un dispositif de verrouillage commun (7) vient s'engager.

5. Boîtier selon revendication 4,
caractérisé par le fait
que le dispositif de verrouillage (7) peut pivoter autour d'un axe (7a), disposé transversalement par rapport aux axes des chevilles d'articulation (5; 6), et qu'il bloque, dans une première position de pivotement, la pièce d'extrémité (4), l'empêchant de se mouvoir dans le sens des axes des chevilles d'articulation (5; 6) et la libère dans ce sens, dans une seconde position de pivotement.

6. Boîtier selon une ou plusieurs revendications 1 à 5,
caractérisé par le fait
que les dentures (1a; 1b; 2a; 3a) s'étendent, approximativement, sur la longueur totale des zones du boîtier voisines.

7. Boîtier selon une ou plusieurs revendications 1 à 6,
caractérisé par le fait
que les chevilles d'articulation (5; 6) présentent des étranglements coniques (5b; 6b) et que des éléments-ressorts (8), prétendus en direction des centres des chevilles d'articulation (5; 6), sont prévus dans les zones du boîtier entourant les chevilles d'articulation (5; 6).

8. Boîtier selon revendications 7,
caractérisé par le fait que les éléments-ressorts (8) sont des rondelles-ressorts.

9. Boîtier selon une ou plusieurs revendications 1 à 8,
caractérisé par le fait
qu'il est conçu sous forme d'une pièce en matière plastique moulée par injection.
